# EUROPEAN PATENT APPLICATION

(11) **EP 1 914 955 A1**
(43) Date of publication of application: **23.04.2008**
(21) Application number: 07009852.0
(22) Date of filing: 16.05.2007
(51) Int. Cl.: H04L 29/06

(54) **Detection of a compromised proxy mobility management client**

(30) Priority: 14.02.2007 EP 07003166; 30.01.2007 EP 07001999; 20.10.2006 EP 06022076
(71) Applicant: MATSUSHITA ELECTRIC INDUSTRIAL CO., LTD., Osaka 571-8501 (JP)
(72) Inventor: Weninger, Kilian, Dr., 63225 Langen (DE); Velev, Genadi, 63225 Langen (DE); Bachmann, Jens, 63225 Langen (DE); Schuringa, Jon, Dr., 63225 Langen (DE)
(74) Representative: Grünecker, Kinkeldey, Stockmair & Schwanhäusser Anwaltssozietät

(57) **Abstract**

The invention relates to a method for improving security at a local mobility anchor implementing both a network-based and a host-based mobility management scheme for managing the mobility of a mobile node. It suggest a method for verifying an attachment of a mobile node (MN) to a network element in a network, said method comprising receiving a first message on a position of the mobile node (MN) in a first network, said first message comprising a first IP address, receiving a second message on a position of the mobile node (MN) in a second network, said second message comprising a second IP address, transmitting an acknowledgment message to both the first and second IP address, comparing the first message on the position of the mobile node (MN) in the first network and the acknowledgment message, and detecting whether the second message on a position of the mobile node (MN) in the second network is falsified based on the comparison result.

## Description

### FIELD OF THE INVENTION

The invention relates to the mobility management of a mobile node in packet-based communication networks, and more specifically, to a method for improving security at a local mobility anchor implementing both a network-based and a host-based mobility management scheme for managing the mobility of a mobile node. This invention relates to a method for detecting an attempt from a compromised network element to redirect traffic destined to a mobile node. It suggests a method for verifying an attachment of a mobile node to a network element in a network. It also provides a local mobility anchor, a mobile node and a network element that participate in this method.

### TECHNICAL BACKGROUND

Mobile communication systems evolve more and more towards an Internet Protocol (IP)-based network. The Internet consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons, a large IP network is usually divided in subnets and uses a hierarchical addressing scheme. Hence, an IP address does not only identify the corresponding terminal, but additionally contains location information (current subnet) about this terminal. With additional information provided by routing protocols, routers in the network are able to identify the next router towards a specific destination.

If a terminal is mobile, from now on called Mobile Node (MN), and moves between subnets, it must change its IP address to a topologically correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 (see D. Johnson, C. Perkins, J. Arkko, "Mobility Support in IPv6", IETF RFC 3775, June 2004 available at http://www.ietf.org and incorporated herein by reference) is an IP-based mobility protocol that enables mobile nodes to move between subnets in a manner transparent for higher layers and applications, i.e. without breaking higher-layer connections. Therefore, a mobile node has two IP addresses configured: a Care-of-Address (CoA) and a Home Address (HoA). The mobile node's higher layers use the home address for communication with the communication partner, who is associated with the destination terminal, from now on called Corresponding Node (CN). This address does not change and serves the purpose of identification of the mobile node. Topologically, it belongs to the Home Network (HN) of the mobile node. In contrast, the Care-of-Address changes on every movement that results in a subnet change and is used as the locator for the routing infrastructure. Topologically, it belongs to the network the mobile node is currently attached to. One out of a set of Home Agents (HA) located on the home link maintains a mapping of the mobile node's Care-of-Address to the mobile node's Home Address and redirects incoming traffic for the mobile node to its current location. Reasons for having a set of home agents instead of a single HA are redundancy and load balancing.

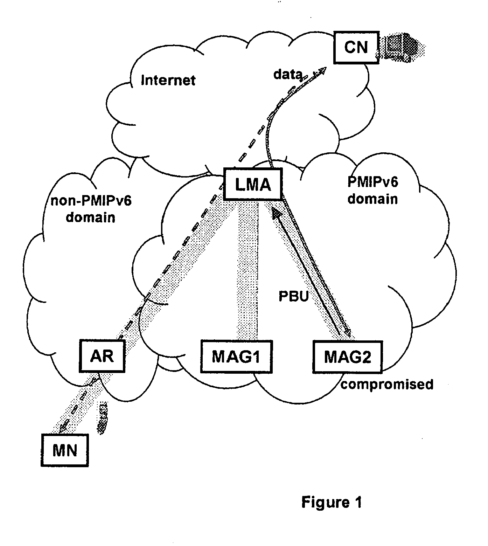

Mobile IPv6 currently defines two modes of operation: bi-directional tunneling and route optimization. Fig. 1 exemplifies the use of bi-directional tunneling. Data packets sent by the correspondent node and addressed to the home address of the mobile node are intercepted by the home agent in the home network and tunneled to care-of address of the mobile node. Data packets sent by the mobile node are reverse tunneled to the home agent, which decapsulates the packets and sends them to the correspondent node (reverse tunneling means that packets are transmitted by the mobile node via a tunnel that starts at the mobile node's care-of address and terminates at the home agent).

For this operation, only the home agent is informed about the care-of address of the mobile node. Therefore, the mobile node sends Binding Update (BU) messages to the home agent. The binding update messages are sent over an IPsec security association and thus are cryptographically protected to provide data origin authentication and integrity protection. This requires that the mobile node and the home agent share a secret key. Hence, the home agent only accepts binding update messages for the mobile node's home address, which are cryptographically protected with the corresponding shared key.

A drawback is that if the mobile node is far away from the home network and the correspondent node is close to the mobile node, the communication path is unnecessarily long, resulting in inefficient routing and high packet delays. The route optimization mode can prevent the inefficiency of bi-directional tunneling mode by using the direct path between correspondent node and mobile node. The mobile node sends binding update messages to the correspondent node, which then is able to directly send data packets to the mobile node (a type 2 routing header is used to send the packets on the direct path). Of course, the correspondent node has to implement Mobile IPv6 route optimization support

To authenticate the binding update message to the correspondent node, the mobile node and the correspondent node perform a so-called return routability procedure, which tests the reachability of the mobile node at the home address and care-of address using a home address test and a care-of address test, respectively, and generates a shared session key. Subsequently, the mobile node may register its care-of address at the correspondent node utilizing the session key for authenticating its binding update sent to the correspondent node.

Mobile IP is a host- or client-based protocol, since the mobility management signalling is between the host/client and the home agent. Hence, Mobile IP is also sometimes called Client Mobile IP (CMIP). Another approach becoming popular is a network-based approach for IP mobility management, i.e., an entity in the visited access network manages the mobility for the mobile node and signals location updates to the home agent. Network-based mobility management has some advantages like less signalling overhead over the air and mobility support for simple IP nodes (i.e., non-CMIP-capable nodes). The drawback is that it requires support from the visited access network.

The IETF is working on such approach for localized mobility management based on the Mobile IP protocol. Since a network entity is acting as a proxy on behalf of the mobile node, the protocol is called Proxy Mobile IP (PMIP). There are variants for IPv6 called PMIPv6 (see e.g. S. Gundavelli, K. Leung, V. Devarapalli, K. Chowdhury, B. Patil, Proxy Mobile IPv6, draft-sgundave-mip6-proxymip6-02, March 2007) and variants for IPv4 called PMIPv4 (see e.g. K. Leung, G. Dommety, P. Yegani, K. Chowdhury, "Mobility Management using Proxy Mobile IPv4", draft-leung-mip4-proxy-mode-02.txt, January 2007).

PMIPv6 introduces a new logical entity called Proxy Mobile Agent (PMA) or Mobile Access Gateway (MAG), which is typically co-located with the Access Router (AR) the mobile node is currently attached to and which sends Binding Update (BU) messages on behalf of the mobile node. The PMIP home agent is an extended CMIP home agent and is called Local Mobility Anchor (LMA). Binding update messages sent by the Mobile Access Gateway are marked with a flag, so that they can be identified as Proxy Binding update (PBU) messages by the Local Mobility Anchor and distinguished from Binding update messages sent by the mobile node (i.e. CMIP signaling messages).

Furthermore, PBU messages contain a Network Access identifier (NAI) option, a home prefix option, and a timestamp option. The NAI option contains the Network Access identifier [RFC4282] of the mobile node, which has a form such as "username@realm" and which is used to identify the mobile node. The home prefix option contains the home address or home prefix of the mobile node. Two addressing models are supported by PMIPv6: In the so-called per-MN-prefix model, every mobile node has a unique home prefix, which can be used in the PBU messages instead of a home address. In the shared prefix model, a mobile node uses a home address from a prefix, which is shared between multiple mobile nodes. The timestamp option contains the time the PBU has been sent and is used by the Local Mobility Anchor to identify the "freshness" of a PBU and correct the ordering of PBU messages. The sequence number value in the PBU message is not used by PMIPv6 and is ignored by the Local Mobility Anchor.

When a mobile node attaches to a new Mobile Access Gateway after a handover or after being powered on, it authenticates with the network, e.g. using a link-layer specific method, the EAP framework (see RFC3748), and an EAP method such as EAP-AKA (see RFC4187). The Mobile Access Gateway typically acts as pass-through authenticator and forwards the EAP packets to a backend authentication server, such as a AAA server or infrastructure, e.g. using a AAA protocol such as Diameter (see RFC3588, RFC4072) or Radius (see RFC2865, RFC3579). The mobile node uses e.g. a Network Access identifier as identifier during network authentication. If the network authentication is successful, the Mobile Access Gateway obtains the mobile node's profile from the AAA server including the mobile node's home prefix and stores the profile together with the Network Access identifier. The Mobile Access Gateway then sends a PBU to the Local Mobility Anchor to register the mobile node's new location. The PBU sending process can be triggered, e.g. by a successful network authentication, by DHCP (Dynamic Host Configuration Protocol) messages or others. Further, the Mobile Access Gateway announces the mobile node's home prefix to the mobile node. Consequently, the mobile node thinks it is at home as long as it moves within the set of Mobile Access Gateways announcing the mobile node's home prefix and managing the mobility of the mobile node (henceforth called PMIPv6 or PMIP domain) and it does not notice that it changes subnets. A tunnel between the Local Mobile Anchor and the Mobile Access Gateway is established and all traffic from and to the mobile node is forwarded through this tunnel.

The proxy binding update messages are sent over an IPsec security association and thus are cryptographically protected to provide data origin authentication and integrity protection. This typically requires that a mobile access gateway and a home agent share a secret key. Hence, the home agent only accepts proxy binding update messages PBU for a mobile access gateway's address, which is cryptographically protected with the corresponding shared key. Since the Local Mobility Anchor accepts basically any PBU message that is sent by a trusted Mobile Access Gateway, which owns a correct shared key, a problem arises if a Mobile Access Gateway gets compromised, i.e. if an attacker is able to gain control of a trusted Mobile Access Gateway. In this case, this Mobile Access Gateway can mount off-path attacks by sending a bogus PBU to the Local Mobile Anchor and redirect the traffic for any mobile node in the PMIP domain to itself. The problem is even more severe, if the Local Mobility Anchor is also the CMIP anchor of a mobile node and the PMIP-Home Address is equal to the CMIP-Home Address. In this case, the attack is extended to MlPv6 and the attacker can redirect traffic for mobile nodes that are located outside the PMIP domain.

This situation is illustrated in Figure 1. A mobile node (MN), which exchanges data packets with a correspondent node (CN), is located outside its home PMIP domain and uses the Local Mobility Anchor (LMA) as Home Agent for MIPv6. When the mobile node is in the PMIP domain, it may be served by a Mobile Access Gateway MAG1. However, a compromised Mobile Access Gateway MAG2 can send a bogus PBU for the mobile node's Home Address. The Local Mobile Anchor accepts this bogus PBU thinking that the mobile node has moved to the Mobile Access Gateway MAG2. Thus, it forwards all incoming traffic for the mobile node to the Mobile Access Gateway MAG2.

Hence, two types of redirection attacks can be distinguished, depending on the position of a mobile node. Firstly, redirection attacks can be directed against mobile nodes that are located in the same PMIPv6 domain than the compromised Mobile Access Gateway (scenario 1). Secondly, redirection attacks can be directed against mobile nodes that are located outside the PMIPv6 domain of the compromised Mobile Access Gateway and that are using Mobile IPv6 (scenario 2).

Regarding scenario 1, the Local Mobile Anchor could check whether the Mobile Access Gateway is authorized to create a binding cache entry for mobile nodes (see S. Gundavelli, K. Leung, V. Devarapalli, K. Chowdhury, B. Patil, Proxy Mobile IPv6, draft-sgundave-mip6-proxymip6-02, March 2007). The details of this check are not described, but it is suggested that a policy store such as an AAA infrastructure can be queried. However, consulting the policy store or an AAA server for every received PBU message would significantly increase the handover delay.

Regarding scenario 2, S. Gundavelli, K. Leung, V. Devarapalli, K. Chowdhury, B. Patil, Proxy Mobile IPv6, draft-sgundave-mip6-proxymip6-02, March 2007 describes a mechanism that the Local Mobility Anchor, upon receiving a PBU message, does not change the binding cache entry before the de-registration BU message is received from the mobile node, if the current binding cache entry indicates that the mobile node is located outside the PMIP domain. Since the attacker cannot spoof a de-registration BU message, this mechanism would solve the problem. However, this mechanism also significantly increases the handover delay when a mobile node enters the PMIP domain and does not solve the problem in scenario 1.

### SUMMARY OF THE INVENTION

One object of the invention is to provide an improved method for detecting an attempt from a compromised network element to redirect traffic destined to a mobile node that does not impact handover delay.

The object of the invention is solved by the subject matter of the independent claims. Advantageous embodiments are subject to the dependent claims.

An embodiment of the invention consists in verifying whether a mobile node is really attached to a Mobile Access Gateway that has sent a PBU message to a Local Mobility Anchor by sending an acknowledgement message not only to the IP address comprised in the just received valid PBU message, but also to the IP address comprised in the previously received valid PBU message. Such mechanism allows the detection of an attack without the need to query the policy store or AAA server at every handover time, thereby preventing an increase of the handover delay.

According to a preferred embodiment of the invention, the handover delay can be further reduced if the Local Mobility Anchor updates the binding cache entry immediately after receiving a valid PBU from a trusted Mobile Access Gateway and starts the procedure for verifying whether the mobile node is really located at the Mobile Access Gateway that sends the PBU after that, i.e., data traffic can flow immediately to the new location and the attack detection is done concurrently. This optimistic approach ensures that handover delay is not increased compared to regular PMIP handover, while still being able to detect a redirection attack.

One embodiment of the invention provides a method for verifying an attachment of a mobile node to a network element in a network, said network using a network-based mobility management scheme for managing the mobility of the mobile node, said method comprising receiving a first message on a position of the mobile node in a first network, said first message comprising a first IP address, receiving a second message on a position of the mobile node in a second network, said second message comprising a second IP address, wherein said second network uses a network-based mobility management scheme for managing the mobility of the mobile node, transmitting an acknowledgment message to both the first and second IP address, comparing the first message on the position of the mobile node in the first network and the acknowledgment message, and detecting whether the second message on a position of the mobile node in the second network is falsified based on the comparison result.

Another embodiment of the invention provides a method for verifying an attachment of a mobile node to a network element in a network, said network using a network-based mobility management scheme for managing the mobility of the mobile node, said method comprising the steps executed by a local mobility anchor of receiving a first message on a position of the mobile node in a first network, said first message comprising a first IP address, receiving a second message on a position of the mobile node in a second network, said second message comprising a second IP address, wherein said second network uses a network-based mobility management scheme for managing the mobility of the mobile node, transmitting an acknowledgment message to both the first and second IP address, said acknowledgment message requesting a re-transmission of a first message on a position of the mobile node in the first network and a second message on a position of the mobile node in the second network, respectively, detecting whether the second message on a position of the mobile node in the second network is falsified based on a re-transmitted message on the position of the mobile node that is received by the local mobility anchor.

Another embodiment of the invention provides a local mobility anchor adapted to verify an attachment of a mobile node to a network element in a network, said network using a network-based mobility management scheme for managing the mobility of the mobile node, said local mobility anchor comprising receiving means for receiving a first message on a position of a mobile node in a first network, said first message comprising a first IP address, and a second message on a position of the mobile node in a second network, said second message comprising a second IP address, wherein said second network uses a network-based mobility management scheme for managing the mobility of the mobile node, and transmitting means for transmitting an acknowledgment message to both the first and second IP address.

Yet another embodiment of the invention provides a mobile node, comprising transmitting means for transmitting a first message on a position of the mobile node in a first network, said first network using a mobile node-based mobility management scheme for managing the mobility of the mobile node, receiving means for receiving an acknowledgment message from a local mobility anchor, comparing means for comparing the first message on the position of the mobile node in the first network and the received acknowledgment message, and detecting means for detecting whether a second message received at the local mobility anchor on a position of the mobile node in a second network, said second network using a network-based mobility management scheme for managing the mobility of the mobile node, is falsified based on the comparison result.

Another embodiment of the invention provides a network element, comprising transmitting means for transmitting a first message on a position of a mobile node in a first network, said first network using a network-based mobility management scheme for managing the mobility of the mobile node, receiving means for receiving an acknowledgment message from a local mobility anchor, comparing means for comparing the first message on the position of the mobile node in the first network and the received acknowledgment message, and detecting means for detecting whether a second message received at the local mobility anchor on a position of the mobile node in a second network, said second network using a network-based mobility management scheme for managing the mobility of the mobile node, is falsified based on the comparison result.

Yet another embodiment of the invention provides a local mobility anchor adapted to verify an attachment of a mobile node to a network element in a network, said network using a network-based mobility management scheme for managing the mobility of the mobile node, said local mobility anchor comprising receiving means for receiving a first message on a position of a mobile node in a first network, said first message comprising a first IP address, and a second message on a position of the mobile node in a second network, said second message comprising a second IP address, wherein said second network uses a network-based mobility management scheme for managing the mobility of the mobile node, and transmitting means for transmitting an acknowledgment message to both the first and second IP address, said acknowledgment message requesting a re-transmission of a first message on a position of the mobile node in the first network and a second message on a position of the mobile node in the second network, respectively, detecting means for detecting whether the second message on a position of the mobile node in the second network is falsified based on a re-transmitted message on the position of the mobile node that is received by the local mobility anchor.

### BRIEF DESCRIPTION OF THE FIGURES

In the following, the invention is described in more detail in reference to the attached figures and drawings. Similar or corresponding details in the figures are marked with the same reference numerals.
- **Figure 1**: shows an example of a compromised Mobile Access Gateway redirecting traffic destined to a mobile node that is not attached thereto;
- **Figure 2**: shows an example of a signaling flow according to a first embodiment of the invention, wherein a compromised Mobile Access Gateway in a PMIP domain attempts to redirect traffic destined to a mobile node located outside the PMIP domain;

- **Figure 3**: shows an example of a signaling flow according to the first embodiment of the invention, wherein a compromised Mobile Access Gateway in a PMIP domain attempts to redirect traffic destined to a mobile node located inside the PMIP domain;
- **Figure 4**: shows an example of a signaling flow according to a second embodiment of the invention, wherein a compromised Mobile Access Gateway in a PMIP domain attempts to redirect traffic destined to a mobile node located outside the PMIP domain;
- **Figure 5**: shows an example of a signaling flow according to the second embodiment of the invention, wherein a compromised Mobile Access Gateway in a PMIP domain attempts to redirect traffic destined to a mobile node located inside the PMIP domain.

### DETAILED DESCRIPTION OF THE INVENTION

In the following, the invention will be described with respect to a situation where the functionalities of the Local Mobility Anchor and Home Agent are co-located in a same physical entity. The terms "Local Mobility Anchor" and "Home Agent" will hence be used interchangeably. Furthermore, the invention will be described with respect to a situation where a mobile node is allowed to switch between a network-based mobility management scheme and a host-based mobility management scheme during an application session. An example of a network-based mobility management scheme that can be used is the PMIPv6 protocol as defined in S. Gundavelli, K. Leung, V. Devarapalli, K. Chowdhury, B. Patil, Proxy Mobile IPv6, draft-sgundave-mip6-proxymip6-02, March 2007. However, the invention is not limited to this protocol and other network-based mobility management schemes such as PMIPv4 or other variants of PMIP can be used.

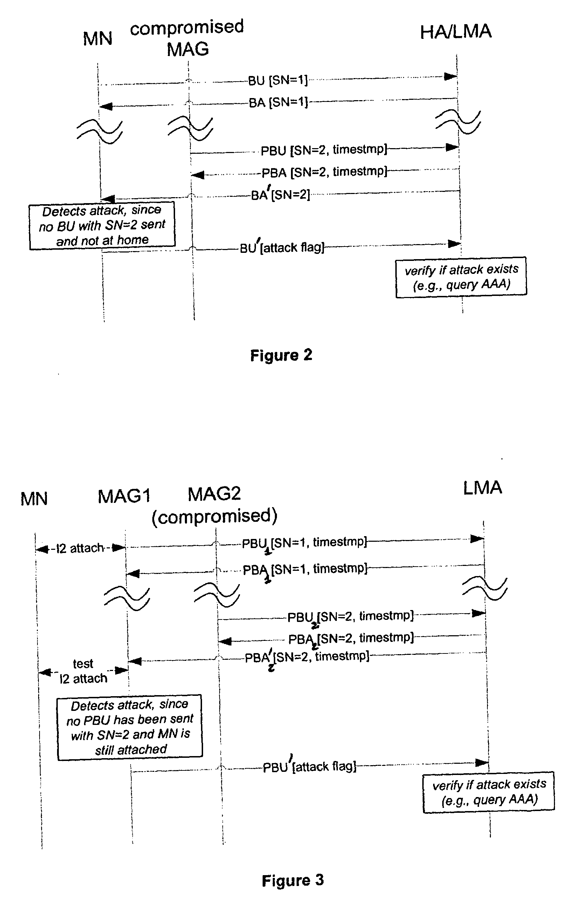

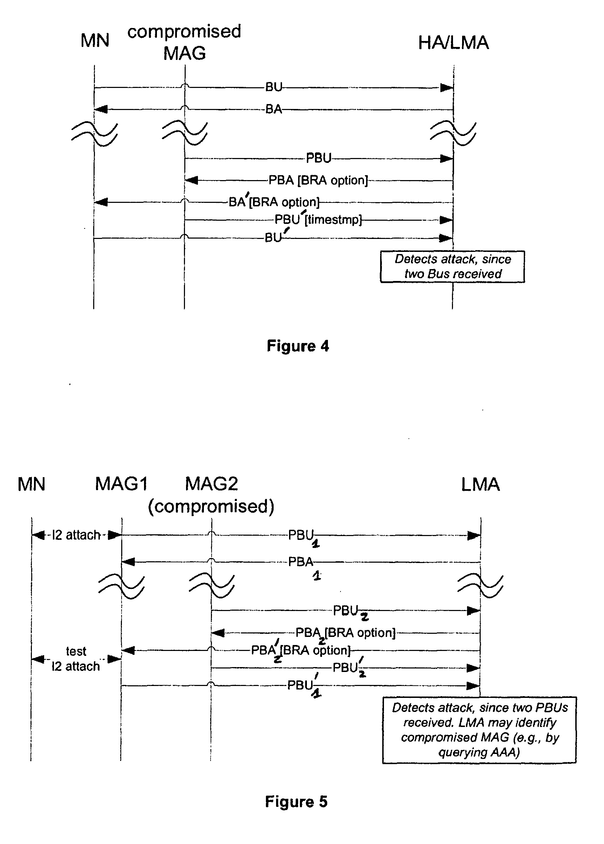

In the following, two embodiments of the invention will be described. A first embodiment will be described with respect to Figures 2 and 3, while a second embodiment will be described with respect to Figures 4 and 5.

A first variant of the first embodiment will be described with respect to Figure 2. A mobile node is located in a domain implementing a client-based mobility management scheme.

The mobile node thus communicates its position by sending a binding update message BU to a Local Mobility Anchor LMA. The Local Mobility Anchor LMA first checks authentication information contained in the binding update message BU to identify that this binding update BU can be trusted. After having accepted the binding update, the Local Mobility Anchor LMA then transmits a binding acknowledgment message BA to the Care-of-Address of the mobile node contained in the binding update BU to confirm that the Care-of-Address was saved in the binding cache entry of the Local Mobility Anchor LMA.

Figure 2 illustrates an attempt by a compromised Mobile Access Gateway in a domain implementing a network-based mobility management scheme to redirect traffic destined to the mobile node. The Mobile Access Gateway transmits a bogus proxy binding update message PBU to the Local Mobility Anchor LMA. The Local Mobility Anchor updates its binding cache entry correspondingly by replacing the old Care-of-Address of the mobile node by the new Care-of-Address of the Mobile Access Gateway contained in the bogus proxy binding update PBU. The Local Mobility Anchor LMA then sends a proxy binding acknowledgement message PBA to the Care-of-Address of the compromised Mobile Access Gateway. Further, the Local Mobility Anchor LMA transmits a binding acknowledgement BA' to the Care-of-Address of the mobile node previously saved in the binding cache entry, in addition to the proxy binding acknowledgment message PBA sent to the newly saved Care-of-Address of the compromised Mobile Access Gateway.

The mobile node can detect an attempt to redirect traffic by the compromised Mobile Access Gateway by comparing the received binding acknowledgment message BA' and the binding update messages that the mobile node previously sent to the Local Mobility Anchor LMA. If the mobile node notices a binding acknowledgment message that does not correspond to any binding update message that it sent to the Local Mobility Anchor LMA, then the mobile node detects a potential attempt of redirecting traffic by a compromised Mobile Access Gateway.

The mobile node can check whether a binding acknowledgment message corresponds to a binding update message by consulting the binding update list, which contains information about the previously sent binding update messages.

According to an embodiment of the invention, a binding acknowledgment message is defined as corresponding to a specific binding update message, if the respective sequence numbers of the binding update message and binding acknowledgment message are equal to each other and no binding acknowledgment message has yet been received for this specific binding update so far, i.e. this binding acknowledgment message is the first one received. However, other ways of mapping a binding update message to a binding acknowledgment message may be used.

In the example illustrated in Figure 2, the mobile node first transmits a binding update message BU to indicate its position to the Local Mobility Anchor LMA. This binding update message BU comprises a sequence number SN equal to 1. The binding acknowledgment message BA sent by the Local Mobility Anchor LMA comprises a sequence number having a value of 1 and thus corresponds to the binding update message BU transmitted by the mobile node.

The compromised Mobile Access Gateway, however, cannot obtain the value of the sequence number in a binding update message from the mobile node. Hence, the proxy binding update message PBU sent by the compromised Mobile Access Gateway to the Local Mobility Anchor LMA has a sequence number value that differs from the sequence number value of the binding update message from the mobile node. In the example in Figure 2, the proxy binding update message PBU has a sequence number value of 2. The Local Mobility Anchor LMA, as a response to the proxy binding update message PBU, sends a proxy binding acknowledgment PBA to the Care-of-Address of the Mobile Access Gateway that has a sequence number value of 2. Further, the Local Mobility Anchor LMA transmits a further binding acknowledgment message BA' to the Care-of-Address of the mobile node previously saved in the binding cache entry. This further binding acknowledgment message BA' has a sequence number of 2.

The mobile node, upon receiving the binding acknowledgment message BA' from the Local Mobility Anchor LMA, compares the binding acknowledgment message BA' with the previously sent binding update message BU. The mobile node notices that the sequence numbers of the respective messages do not correspond since the sequence number of the binding update message BU has a value of 1 and that of the binding acknowledgment message BA' is 2. Hence, the mobile node detects an attack.

Moreover, in case the Mobile Access Gateway was able to retrieve the current value of the sequence number exchanged between the mobile node and the Local Mobility Anchor, the Mobile Access Gateway could transmit a binding acknowledgment message BA' having a sequence number value that corresponds to that of a binding update message transmitted by the mobile node, i.e. a value of 1. However, the mobile node would notice, by consulting the binding update list, that a binding acknowledgment BA has already been received, which has a sequence number value of 1, thus corresponding to the binding update message BU. Hence, the mobile node would notice that the binding acknowledgment message BA' is the second binding acknowledgment message received by the mobile node that has the sequence number value of 1.

Hence, a mobile node, upon receiving a binding acknowledgment message, detects an attempt of traffic redirection if the mobile node has not sent a binding update message corresponding to the received binding acknowledgement message, i.e. the mobile node does not find any binding update with the same sequence number than the received binding acknowledgment message, for which no binding acknowledgment has been received so far.

A further condition should be taken into account by the mobile node when detecting an attempt of traffic redirection, in case the mobile node enters a Proxy Mobile IP home domain. The mobile node should detect an attack only if the received binding acknowledgment message does not correspond to any previously sent binding update message and if the mobile node is not at home, i.e. the prefix announced by an access router to which the mobile node is attached is not the home prefix of the mobile node. The second condition allows to prevent the erroneous detection of an attack when the mobile node enters a PMIP home domain.

Once the mobile node has detected an attack, it sends a new binding update message BU', which contains the Care-of-Address of the mobile node, to the Local Mobility Anchor LMA to correct the binding cache entry from the saved Care-of-Address of the compromised Mobile Access Gateway to the Care-of-Address of the mobile node.

According to a further embodiment of the invention, the mobile node may inform the Local Mobility Anchor about the suspected attack, e.g., by setting an "attack flag" in the binding update message BU'. Upon receiving the binding update message BU', the Local Mobility Anchor can then undertake measures to verify whether an attack really exists and to identify the compromised Mobile Anchor Gateway. This could be done, e.g., by querying the AAA infrastructure to determine from which location the mobile node has recently been authenticated to the network. If this determined location is different from the location of the Mobile Anchor Gateway that sent the proxy binding update PBU, then the Local Mobility Anchor considers that the Mobile Anchor Gateway is compromised. After identifying the compromised Mobile Anchor Gateway, the Local Mobility Anchor can remove this Mobile Anchor Gateway from the list of trusted Mobile Anchor Gateways.

A second variant of the first embodiment will now be described with respect to Figure 3. The situation described is that the mobile node is now inside a domain implementing a network-based mobility management scheme. The mobile node is attached to a first Mobile Access Gateway MAG1, which thus transmits a proxy binding update message PBU1 to a Local Mobility Anchor LMA to indicate the mobile node attachment. After having accepted the proxy binding update message PBU1, the Local Mobility Anchor LMA then transmits a proxy binding acknowledgment message PBA1 to the Care-of-Address, which is the first Mobile Access gateway MAG1 address contained in the proxy binding update PBU1, to confirm that the Care-of-Address was saved in the binding cache entry of the Local Mobility Anchor LMA.

Figure 3 illustrates an attempt by a second compromised Mobile Access Gateway MAG2 to redirect traffic destined to the mobile node. The second Mobile Access Gateway MAG2 transmits a bogus proxy binding update message PBU2 to the Local Mobility Anchor LMA. The Local Mobility Anchor updates its binding cache entry correspondingly by replacing the old Care-of-Address corresponding to the first Mobile Access Gateway MAG1 by the new Care-of-Address corresponding to the second Mobile Access Gateway MAG2 contained in the bogus proxy binding update PBU2. The Local Mobility Anchor LMA then sends a proxy binding acknowledgement message PBA2 to the Care-of-Address corresponding to the compromised Mobile Access Gateway MAG2. Further, the Local Mobility Anchor LMA transmits a proxy binding acknowledgement message PBA'2 to the Care-of-Address corresponding to the first Mobile Access Gateway MAG1 previously saved in the binding cache entry, in addition to the proxy binding acknowledgment message PBA2 sent to the newly saved Care-of-Address corresponding to the compromised Mobile Access Gateway MAG2.

The first Mobile Access Gateway MAG1 can detect an attempt to redirect traffic by the compromised Mobile Access Gateway MAG2 by comparing the received proxy binding acknowledgment message PBA'2 and the proxy binding update messages that the first Mobile Access Gateway MAG1 previously sent to the Local Mobility Anchor LMA. If the first Mobile Access Gateway MAG1 notices a proxy binding acknowledgment message that does not correspond to any proxy binding update message that it sent to the Local Mobility Anchor LMA, then the first Mobile Access Gateway MAG1 checks whether the mobile node is still attached to the first Mobile Access Gateway MAG1. If this is the case, it detects a potential attempt of redirecting traffic by a compromised Mobile Access Gateway.

As shown in Figure 3, upon receiving the proxy binding acknowledgment message PBA'2, the first Mobile Access Gateway MAG1 notices that it has not sent the corresponding proxy binding update message, since it already has received a proxy binding acknowledgment PBA1 for the previously sent proxy binding update PBU1 and since the sequence number in the proxy binding acknowledgment message PBA'2 differs from that in the proxy binding update PBU1. The first Mobile Access Gateway MAG1 then checks whether the mobile node is still attached to the first Mobile Access Gateway MAG1, as shown by the "test layer 2 attach" signaling in Figure 3. If the mobile node is still attached to the first Mobile Access Gateway MAG1, it detects an attack from the second Mobile Access Gateway MAG2.

Once the first Mobile Access Gateway MAG1 has detected an attack, it sends a new proxy binding update message PBU' to the Local Mobility Anchor to correct the binding cache entry at the Local Mobility Anchor. Furthermore, the first Mobile Access Gateway MAG1 may inform the Local Mobility Anchor about the suspected attack, e.g., by setting a new "attack flag" in the proxy binding update message PBU'. The Local Mobility Anchor can then undertake measures to verify whether an attack really exists or not and to identify the compromised Mobile Access Gateway. This could be done by querying the AAA infrastructure to determine from which location the mobile node has been authenticated to the network. After identifying the compromised Mobile Access Gateway, the Local Mobility Anchor can remove this Mobile Access Gateway from the list of trusted Mobile Access Gateways.

In the method illustrated with respect to Figure 2 resp. Figure 3, if the binding acknowledgment message BA' resp. the proxy binding acknowledgment message PBA'2 to the old Care-of-Address or the mobile node resp. the first Mobile Access Gateway MAG1 gets lost, an attack cannot timely be detected. In such case, the attack can only be detected after the next binding update message from the mobile node resp. uncompromised Mobile Access Gateway is followed by a binding update from the compromised Mobile Access Gateway, which can take some time depending on the binding cache entry lifetime. One possible way to speed up the detection in case of packet loss would be to reduce the binding cache entry lifetime. Another option would consist in introducing an acknowledgement message from the mobile node resp. the Mobile Access Gateway for acknowledging the reception of the binding acknowledgment message BA' resp. the proxy binding acknowledgment message PBA'2, so that the binding acknowledgment message BA' resp. the proxy binding acknowledgment message PBA'2 can be retransmitted by the Local Mobility Anchor if no acknowledgement is received within a certain time frame.

According to an embodiment of the invention, the Local Mobility Anchor updates the binding cache entry immediately after receiving the proxy binding update to speed up handover delay. However, in case of a bogus proxy binding update, this would allow temporary redirection of traffic. Hence, the Local Mobility Anchor could create a temporary binding cache entry and set a timer after having sent the binding acknowledgment message BA' resp. proxy binding acknowledgment message PBA'2 to the old Care-of-Address of the mobile node resp. the first Mobile Access Gateway MAG1. When the timer expires and no binding update resp. proxy binding update message with attack flag has been received, the Local Mobility Anchor can update the binding cache entry with the information from the temporary binding cache entry. This would prevent temporary redirection of traffic, but would increase handover delay.

A second embodiment of the invention will now be described with respect to Figures 4 and 5.

A first variant of the second embodiment will be described with respect to Figure 4. A mobile node is located in a domain implementing a client-based mobility management scheme. The mobile node thus communicates its position by sending a binding update message BU to a Local Mobility Anchor LMA. The Local Mobility Anchor LMA first checks authentication information contained in the binding update message BU to identify that this binding update BU has really been sent by the mobile node corresponding to the home address contained in the BU. After having accepted the binding update, the Local Mobility Anchor LMA then transmits a binding acknowledgment message BA to the Care-of-Address of the mobile node contained in the binding update message BU to confirm that the Care-of-Address was saved in the binding cache entry of the Local Mobility Anchor LMA.

Figure 4 illustrates an attempt by a compromised Mobile Access Gateway in a domain implementing a network-based mobility management scheme to redirect traffic destined to the mobile node. The Mobile Access Gateway transmits a bogus proxy binding update message PBU to the Local Mobility Anchor LMA. The Local Mobility Anchor updates its binding cache entry correspondingly by replacing the old Care-of-Address of the mobile node by the new Care-of-Address of the Mobile Access Gateway contained in the bogus proxy binding update PBU. The Local Mobility Anchor LMA then sends a proxy binding acknowledgement message PBA to the Care-of-Address of the compromised Mobile Access Gateway. Further, the Local Mobility Anchor LMA transmits a binding acknowledgement BA' to the Care-of-Address of the mobile node previously saved in the binding cache entry, in addition to the proxy binding acknowledgment message PBA sent to the newly saved Care-of-Address of the compromised Mobile Access Gateway.

In this variant of the second embodiment of the invention, the Local Mobility Anchor requests a new binding update message from both the Care-of-Address currently saved in the binding cache entry and the Care-of-Address in the received PBU or BU message. This request can be realized by sending different types of messages, such as e.g. a proxy binding acknowledgement message PBA and a binding acknowledgment message BA', or, alternatively, mobility header signaling request messages (MHSR), as specified in B.Haley, Sri Gundavelli, "Mobility Header Signaling Message", draft-haley-mip6-mh-signaling-02.txt, March 2007. Additionally, a Binding Refresh Advise option (BRA, see Section 6.2.4 in RFC3775) can be included. Setting a value equal or close to zero, preferably less than 5 seconds, for the refresh interval field in the binding refresh advice option or for the lifetime field in the binding acknowledgment message requests the respective receivers of the proxy binding acknowledgement message PBA, the compromised Mobile Access Gateway, and that of the binding acknowledgment message BA', the mobile node, to reply immediately with a proxy binding update PBU' and a binding update BU', respectively, in order to update the binding cache entry in the Local Mobility Anchor.

As shown in Figure 4, upon receiving the binding acknowledgment message BA' with or without Binding Refresh Advise option, the mobile node responds with a new binding update BU' to the Local Mobility Anchor. As mentioned above, the binding acknowledgment message BA' could be replaced by a mobility header signaling request message, even though Figure 4 describes the particular example of a binding acknowledgment message. A Mobile Access Gateway that receives a proxy binding acknowledgement message PBA or a mobility header signaling request with or without a Binding Refresh Advise checks whether the mobile node is still attached and sends a new proxy binding update to the Local Mobility Anchor if this is the case. If the mobile node is not attached anymore, it does not send a new proxy binding update. However, since the Mobile Access Gateway MAG is compromised, it responds with a proxy binding update PBU' although the mobile node is not attached thereto, in order to keep the redirection attack active.

Hence, the Local Mobility Anchor LMA receives both a proxy binding update PBU' and a binding update message BU' as a response to its retransmission request. The Local Mobility Anchor thus detects that there is a compromised Mobile Access Gateway.

According to a first option, the Local Mobility Anchor LMA trusts the mobile node rather than the Mobility Anchor Gateway, because there is a peer-to-peer security association between the mobile node and the Local Mobility Anchor LMA and the mobile node itself is the source of the binding update message BU'. As a result, the Local Mobility Anchor discards the proxy binding update PBU' and considers the Mobile Access Gateway as compromised, meaning that no further proxy binding updates from this Mobile Access Gateway will be accepted.

According to a second option, the Local Mobility Anchor LMA consults a policy store from the AAA infrastructure to verify where the mobile node is authenticated and authorized to use access resources. After the Local Mobility Anchor LMA verifies that the mobile node is not in the PMIP domain, the Local Mobility Anchor LMA considers the Mobile Access Gateway to be compromised.

A second variant of the second embodiment will now be described with respect to Figure 5.

The situation described is that the mobile node is now inside a domain implementing a network-based mobility management scheme. The mobile node is attached to a first Mobile Access Gateway MAG1, which thus transmits a proxy binding update message PBU1 to a Local Mobility Anchor LMA to indicate the mobile node attachment. After having accepted the proxy binding update message PBU1, the Local Mobility Anchor LMA then transmits a proxy binding acknowledgment message PBA1 to the Care-of-Address corresponding to the first Mobile Access gateway MAG1 contained in the proxy binding update PBU1 to confirm that the Care-of-Address was saved in the binding cache entry of the Local Mobility Anchor LMA.

Figure 5 illustrates an attempt by a second compromised Mobile Access Gateway MAG2 to redirect traffic destined to the mobile node. The second Mobile Access Gateway MAG2 transmits a bogus proxy binding update message PBU2 to the Local Mobility Anchor LMA. The Local Mobility Anchor updates its binding cache entry correspondingly by replacing the old Care-of-Address corresponding to the first Mobile Access Gateway MAG1 by the new Care-of-Address corresponding to the second Mobile Access Gateway MAG2 contained in the bogus proxy binding update PBU2. The Local Mobility Anchor LMA then sends a proxy binding acknowledgement message PBA2 to the Care-of-Address corresponding to the compromised Mobile Access Gateway MAG2. Further, the Local Mobility Anchor LMA transmits a proxy binding acknowledgement message PBA'2 to the Care-of-Address corresponding to the first Mobile Access Gateway MAG1 previously saved in the binding cache entry, in addition to the proxy binding acknowledgment message PBA2 sent to the newly saved Care-of-Address corresponding to the compromised Mobile Access Gateway MAG2.

In this variant of the second embodiment of the invention, the Local Mobility Anchor sends either a mobility header signaling request or, as illustrated in Figure 5, a proxy binding acknowledgement message PBA2 to the Care-of-Address corresponding to the compromised Mobile Access Gateway MAG2 and a proxy binding acknowledgment message PBA'2 to the Care-of-Address corresponding to the first Mobile Access Gateway MAG1, with or without a Binding Refresh Advise option (BRA, see Section 6.2.4 in RFC3775).

Whenever a mobile access gateway receives a request for retransmission, the mobile access gateway performs a check to determine whether the mobile node is still attached thereto. If the mobile node is still attached, then the mobile access gateway sends a proxy binding update to the Local Mobility Anchor. The compromised Mobile Access Gateway MAG2 sends a proxy binding update PBU'2 to the Local Mobility Anchor to keep the redirection attack active, and the first Mobile Access Gateway MAG1, in case of attachment of the mobile node, replies with a proxy binding update PBU' 1, in order to update the binding cache entry in the Local Mobility Anchor.

As described above, the Local Mobility Anchor receives 2 proxy binding updates, upon which the Local Mobility Anchor LMA determines that one of the Mobile Access Gateways is compromised. Next, the Local Mobility Anchor LMA can consult the policy store of the AAA infrastructure as described above in order to identify the compromised Mobile Access Gateway.

As mentioned above with respect to the first embodiment, the Local Mobility Anchor LMA could update the binding cache entry immediately after receiving a proxy binding update to speed up handover delay. However, this would allow temporary redirection of traffic by a compromised Mobile Access Gateway. Hence, the Local Mobility Anchor could create a temporary binding cache entry with the new Care-of-Address and set a timer after having sent the binding acknowledgment resp. proxy binding acknowledgment message to the current Care-of-Address in the binding cache entry. When the timer expires and no binding update resp. proxy binding update message was received from the current Care-of-Address, the Local Mobility Anchor updates the binding cache entry with the information from the temporary binding cache entry. The Local Mobility- Anchor thus assumes that the new Care-of-Address comes from a non-compromised Mobile Access Gateway. This alternative would prevent temporary redirection of traffic, but increase handover delay.

Even though the invention has been described in particular with a situation where the Local Mobility Anchor transmits a binding acknowledgment message to either the mobile node or a Mobile Access Gateway, other types of messages to detect attacks can be used from the ones described, without departing from the scope of the invention.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

## Claims

1. A method for verifying an attachment of a mobile node (MN) to a network element in a network, said network using a network-based mobility management scheme for managing the mobility of the mobile node (MN), said method comprising the following steps:
receiving a first message on a position of the mobile node (MN) in a first network, said first message comprising a first IP address,
receiving a second message on a position of the mobile node (MN) in a second network, said second message comprising a second IP address, wherein said second network uses a network-based mobility management scheme for managing the mobility of the mobile node (MN),
transmitting an acknowledgment message to both the first and second IP address,
comparing the first message on the position of the mobile node (MN) in the first network and the acknowledgment message, and
detecting whether the second message on a position of the mobile node (MN) in the second network is falsified based on the comparison result.

2. The method according to claim 1, wherein the first network uses a mobile node (MN)-based mobility management scheme for managing the mobility of the mobile node (MN) and the second network uses a network-based mobility management scheme for managing the mobility of the mobile node (MN),
wherein the first message (BU) is received from the mobile node (MN) by a local mobility anchor (LMA), said first message being accepted by the local mobility anchor (LMA), and the second message (PBU) is received from a network element in the second network by the local mobility anchor (LMA), the acknowledgment message is a binding acknowledgement message (PBA, BA') transmitted by the local mobility anchor (LMA) to the mobile node (MN) and the network element in the second network, respectively,
the steps of comparing and detecting are performed by the mobile node (MN).

3. The method according to claim 1 or 2, wherein the first and second message further comprise a first and second sequence number, respectively, and the acknowledgment message (PBA, BA') is transmitted with the second sequence number, wherein the first sequence number of the first message on the position of the mobile node (MN) in the first network and the second sequence number of the acknowledgment message (PBA, BA') are compared with each other.

4. The method according to claim 3, further comprising determining, by the mobile node (MN), that the second message (PBU) from the network element on a position of the mobile node (MN) in the second network is falsified
if the second sequence number of the received acknowledgment message (BA') differs from the first sequence number of the first message (BU) and the prefix announced to the mobile node (MN) by an access router differs from a home prefix of the mobile node (MN), or
in case the second sequence number of the received acknowledgment message (BA') is equal to the first sequence number of the first message (BU), if the received acknowledgment message (BA') is not the first acknowledgment message (BA') received comprising the second sequence number and the prefix announced to the mobile node (MN) by an access router differs from a home prefix of the mobile node (MN).

5. The method according to one of claims 2 to 4, further comprising transmitting, by the mobile node (MN), to the local mobility anchor (LMA), a third message (BU') on a position of the mobile node (MN) in the first network, when the second message (PBU) from the network element on a position of the mobile node (MN) in the second network is determined to be falsified.

6. The method according to claim 5, further comprising notifying, by the mobile node (MN), the local mobility anchor (LMA) that the second message (PBU) from the network element on a position of the mobile node (MN) in the second network is determined to be falsified, preferentially by setting a flag in the third message (BU').

7. The method according to claim 6, further comprising discarding, by the local mobility anchor (LMA), the second message (PBU, PBU') from the network element on a position of the mobile node (MN) in the second network, and removing, by the local mobility anchor (LMA), the network element from a list of trusted network elements.

8. The method according to claim 6, further comprising obtaining, by the local mobility anchor (LMA), information from an authentication server on a network authentication of the mobile node (MN) upon reception of the notification from the mobile node (MN), and removing the network element from a list of trusted network elements upon noticing an absence of network authentication of the mobile node (MN) with the network element.

9. The method according to claim 1, wherein the first and second network use a network-based mobility management scheme for managing the mobility of the mobile node (MN),
wherein the first message (PBU1) is received from a first network element in the first network by a local mobility anchor (LMA), said first message being accepted by the local mobility anchor (LMA), and the second message (PBU2) is received from a second network element in the second network by the local mobility anchor (LMA),
the acknowledgment message is a binding acknowledgment message (PBA2, PBA'2) transmitted by the local mobility anchor (LMA) to both the first and the second network element, and
the steps of comparing and detecting are performed by the first network element.

10. The method according to claim 9, further comprising determining, by the first network element, whether the mobile node (MN) is still attached to the first network element, wherein the first network element detects whether the second message on a position of the mobile node (MN) in the second network is falsified based on at least one of the comparison result and the determination result.

11. The method according to claim 10, wherein the first and second message further comprise a first and second sequence number, respectively, and the acknowledgment message (PBA2, PBA'2) is transmitted with the second sequence number, wherein the first sequence number of the first message on the position of the mobile node (MN) in the first network and the second sequence number of the acknowledgment message (PBA'2) are compared with each other.

12. The method according to claim 11, further comprising determining, by the first network element, that the second message (PBU2) from the second network element on a position of the mobile node (MN) in the second network is falsified
if the second sequence number of the received acknowledgment message (PBA'2) differs from the first sequence number of the first message (PBU1) and the mobile node (MN) is still attached to the first network element, or
in case the second sequence number of the received acknowledgment message (PBA'2) is equal to the first sequence number of the first message (PBU1), if the received acknowledgment message (PBA'2) is not the first acknowledgment message (PBA'2) received comprising the second sequence number, and the mobile node (MN) is still attached to the first network element.

13. The method according to one of claims 9 to 12, further comprising transmitting, by the first network element, to the local mobility anchor (LMA), a third message (PBU') on a position of the mobile node (MN) in the first network, when the second message (PBU2) from the second network element on a position of the mobile node (MN) in the second network is determined to be falsified.

14. The method according to claim 13, further comprising notifying, by the first network element, the local mobility anchor (LMA) that the second message (PBU2) from the second network element on a position of the mobile node (MN) in the second network is determined to be falsified, preferentially by setting a flag in the third message (PBU').

15. The method according to claim 14, further comprising obtaining, by the local mobility anchor (LMA), information from an authentication server on a network authentication of the mobile node (MN) upon reception of the notification from the first network element, and removing, by the local mobility anchor (LMA), the second network element from a list of trusted network elements upon noticing an absence of network authentication of the mobile node (MN) with the second network element.

16. A method for verifying an attachment of a mobile node (MN) to a network element in a network, said network using a network-based mobility management scheme for managing the mobility of the mobile node (MN), said method comprising the following steps executed by a local mobility anchor (LMA):
receiving a first message on a position of the mobile node (MN) in a first network, said first message comprising a first IP address,
receiving a second message on a position of the mobile node (MN) in a second network, said second message comprising a second IP address, wherein said second network uses a network-based mobility management scheme for managing the mobility of the mobile node (MN),
transmitting an acknowledgment message to both the first and second IP address, said acknowledgment message requesting a re-transmission of a first message on a position of the mobile node (MN) in the first network and a second message on a position of the mobile node (MN) in the second network, respectively,
detecting whether the second message on a position of the mobile node (MN) in the second network is falsified based on a re-transmitted message on the position of the mobile node (MN) that is received by the local mobility anchor (LMA).

17. The method according to claim 1.6, wherein the first network uses a mobile node (MN)-based mobility management scheme for managing the mobility of the mobile node (MN) and the second network uses a network-based mobility management scheme for managing the mobility of the mobile node (MN), the first message (BU) is received from the mobile node (MN), said first message being accepted by the local mobility anchor (LMA), and the second message (PBU) is received from a network element in the second network,
wherein the acknowledgment message is a binding acknowledgment message (PBA, BA') or a mobility header signalling request message, said acknowledgment message requesting the mobile node (MN) and the network element in the second network to re-transmit a first message (BU') on a position of the mobile node (MN) in the first network and a second message (PBU') on a position of the mobile node (MN) in the second network, respectively.

18. The method according to claim 16 or 17, wherein the acknowledgment message is a binding acknowledgment message (PBA, BA') with a binding refresh advice option, said method further comprising setting a value of a refresh interval field in the binding refresh advice option to essentially zero.

19. The method according to claim 18, wherein a value of a lifetime field in the binding acknowledgment message is set to essentially zero.

20. The method according to claim 16 or 17, wherein the acknowledgment message is a binding acknowledgment message (PBA, BA') without a binding refresh advice option, said method further comprising setting a value of a lifetime field in the binding acknowledgment message to essentially zero.

21. The method according to one of claims 16 to 20, wherein the mobile node (MN) re-transmits a first message (BU') on a position of the mobile node (MN) in the first network only if a prefix announced to the mobile node (MN) by an access router differs from a home prefix of the mobile node (MN).

22. The method according to one of one of claims 16 to 21, further comprising determining that the second message (PBU, PBU') from the network element on a position of the mobile node (MN) in the second network is falsified when both a first message (BU') on a position of the mobile node (MN) in the first network and a second message (PBU') on a position of the mobile node (MN) in the second network are received by the local mobility anchor (LMA).

23. The method according to claim 22, further comprising discarding the second message (PBU, PBU') from the network element on a position of the mobile node (MN) in the second network, and removing the network element from a list of trusted network elements.

24. The method according to claim 22, further comprising obtaining, from an authentication server, information on a network authentication of the mobile node (MN), and removing the network element from a list of trusted network elements upon noticing an absence of network authentication of the mobile node (MN) with the network element.

25. The method according to one of claims 16 to 21, further comprising determining that the second message (PBU, PBU') from the network element on a position of the mobile node (MN) in the second network is genuine when only a second message (PBU') on a position of the mobile node (MN) in the second network is received by the local mobility anchor (LMA).

26. The method according to claim 16, wherein the first and second network use a network-based mobility management scheme for managing the mobility of the mobile node (MN),
the first message (PBU1) is received from a first network element in a first network, said first message being accepted by the local mobility anchor (LMA), and the second message (PBU2) is received from a second network element in the second network,
wherein the acknowledgment message is a binding acknowledgment message (PBA2, PBA'2) or a mobility header signalling request message, said acknowledgment message requesting the first network element and the second network element to re-transmit a first message (PBU'1) on a position of the mobile node (MN) in the first network and a second message (PBU'2) on a position of the mobile node (MN) in the second network, respectively.

27. The method according to claim 26, wherein the acknowledgment message is a binding acknowledgment message (PBA2, PBA'2) with a binding refresh advice option, said method further comprising setting a value of a refresh interval field in the binding refresh advice option to essentially zero.

28. The method according to claim 27, wherein a value of a lifetime field in the binding acknowledgment message is set to essentially zero.

29. The method according to claim 26, wherein the acknowledgment message is a binding acknowledgment message (PBA, BA') without a binding refresh advice option, said method further comprising setting a value of a lifetime field in the binding acknowledgment message to essentially zero.

30. The method according to one of claims 26 to 29, further comprising checking, by the first and second network element, upon receiving the respective acknowledgment message (PBA2, PBA'2), whether the mobile node (MN) is still attached, and re-transmitting a first message (PBU'1) on a position of the mobile node (MN) in the first network and a second message (PBU'2) on a position of the mobile node (MN) in the second network, respectively, only if the mobile node (MN) is attached.

31. The method according to one of claims 26 to 30, further comprising determining that the second message (PBU2, PBU'2) from the second network element on a position of the mobile node (MN) in the second network is falsified when both a first message (PBU'1) on a position of the mobile node (MN) in the first network and a second message (PBU'2) on a position of the mobile node (MN) in the second network are received by the local mobility anchor (LMA).

32. The method according to claim 31, further comprising obtaining, from an authentication server, information on a network authentication of the mobile node (MN), and removing the second network element from a list of trusted network elements upon noticing an absence of network authentication of the mobile node (MN) with the second network element.

33. The method according to one of claims 26 to 30, further comprising determining that the second message (PBU2, PBU'2) from the second network element on a position of the mobile node (MN) in the second network is genuine when only a second message (PBU'2) on a position of the mobile node (MN) in the second network is received by the local mobility anchor (LMA).

34. A local mobility anchor adapted to verify an attachment of a mobile node (MN) to a network element in a network, said network using a network-based mobility management scheme for managing the mobility of the mobile node (MN), said local mobility anchor comprising:
receiving means for receiving a first message on a position of a mobile node (MN) in a first network, said first message comprising a first IP address, and a second message on a position of the mobile node (MN) in a second network, said second message comprising a second IP address, wherein said second network uses a network-based mobility management scheme for managing the mobility of the mobile node (MN), and
transmitting means for transmitting an acknowledgment message to both the first and second IP address.

35. The local mobility anchor according to claim 34, wherein the first and second message further comprise a first and second sequence number, respectively, and the local mobility anchor (LMA) is adapted to transmit the acknowledgment message with the second sequence number.

36. The local mobility anchor according to claim 34 or 35, wherein the local mobility anchor (LMA) is adapted to discard the second message (PBU, PBU') on a position of the mobile node (MN) in the second network, and to remove a network element from which the second message (PBU, PBU') originates from a list of trusted network elements, when the local mobility anchor (LMA) receives from the mobile node (MN) a third message (BU') on a position of the mobile node (MN) in the first network.

37. The local mobility anchor according to claim 34 or 35, wherein the local mobility anchor (LMA) is adapted to obtain information from an authentication server on a network authentication of the mobile node (MN) upon reception of a notification that the second message on a position of the mobile node (MN) in the second network is determined to be falsified, and removing a network element from which the second message originates from a list of trusted network elements upon noticing an absence of network authentication of the mobile node (MN) with the network element.

38. A mobile node, comprising:
transmitting means for transmitting a first message (BU) on a position of the mobile node (MN) in a first network, said first network using a mobile node (MN)-based mobility management scheme for managing the mobility of the mobile node (MN),
receiving means for receiving an acknowledgment message (BA') from a local mobility anchor (LMA),
comparing means for comparing the first message (BU) on the position of the mobile node (MN) in the first network and the received acknowledgment message (BA'), and
detecting means for detecting whether a second message (PBU) received at the local mobility anchor (LMA) on a position of the mobile node (MN) in a second network, said second network using a network-based mobility management scheme for managing the mobility of the mobile node (MN), is falsified based on the comparison result.

39. The mobile node according to claim 38, wherein the first message (BU) further comprises a first sequence number and the received acknowledgment message (BA') comprises a second sequence number, and the mobile node (MN) is adapted to compare the first sequence number of the first message (BU) and the second sequence number of the acknowledgment message (BA') with each other.

40. The mobile node according to claim 39, wherein the mobile node (MN) is adapted to determine that the second message (PBU) on a position of the mobile node (MN) in the second network is falsified
if the second sequence number of the received acknowledgment message (BA') differs from the first sequence number of the first message (BU) and the prefix announced to the mobile node (MN) by an access router differs from a home prefix of the mobile node (MN), or
in case the second sequence number of the received acknowledgment message (BA') is equal to the first sequence number of the first message (BU), if the received acknowledgment message (BA') is not the first acknowledgment message (BA') received comprising the second sequence number and the prefix announced to the mobile node (MN) by an access router differs from a home prefix of the mobile node (MN).

41. The mobile node according to claim 40, wherein the mobile node (MN) is adapted to transmit to the local mobility anchor (LMA) a third message (BU') on a position of the mobile node (MN) in the first network, when the second message (PBU) from the network element on a position of the mobile node (MN) in the second network is determined to be falsified.

42. The mobile node according to claim 41, wherein the mobile node (MN) is adapted to notify the local mobility anchor (LMA) that the second message (PBU) on a position of the mobile node (MN) in the second network is determined to be falsified, preferentially by setting a flag in the third message (BU').

43. A network element, comprising:
transmitting means for transmitting a first message (PBU1) on a position of a mobile node (MN) in a first network, said first network using a network-based mobility management scheme for managing the mobility of the mobile node (MN),
receiving means for receiving an acknowledgment message (PBA'2) from a local mobility anchor (LMA),
comparing means for comparing the first message (PBU1) on the position of the mobile node (MN) in the first network and the received acknowledgment message (PBA'2), and
detecting means for detecting whether a second message (PBU2) received at the local mobility anchor (LMA) on a position of the mobile node (MN) in a second network, said second network using a network-based mobility management scheme for managing the mobility of the mobile node (MN), is falsified based on the comparison result.

44. The network element according to claim 43, wherein the network element is adapted to determine whether the mobile node (MN) is still attached to the network element and to detect whether the second message (PBU2) on a position of the mobile node (MN) in the second network is falsified based on at least one of the comparison result and the determination result.

45. The network element according to claim 43 or 44, wherein the first message (PBU1) further comprises a first sequence number and the received acknowledgment message comprises a second sequence number, respectively, and the network element is adapted to compare the first sequence number of the first message (PBU1) and the second sequence number of the acknowledgment message with each other.

46. The network element according to claim 45, wherein the network element is adapted to determine that the second message (PBU2) on a position of the mobile node (MN) in the second network is falsified
if the second sequence number of the received acknowledgment message (PBA'2) differs from the first sequence number of the first message (PBU1) and the mobile node (MN) is still attached to the network element, or
in case the second sequence number of the received acknowledgment message (PBA'2) is equal to the first sequence number of the first message (PBU1), if the received acknowledgment message (PBA'2) is not the first acknowledgment message (PBA'2) received comprising the second sequence number, and the mobile node (MN) is still attached to the network element.

47. The network element according to one of claims 43 to 46, wherein the network element is adapted to transmit to the local mobility anchor (LMA) a third message (PBU') on a position of the mobile node (MN) in the first network, when the second message (PBU2) from the second network element on a position of the mobile node (MN) in the second network is determined to be falsified.

48. The network element according to claim 47, wherein the network element is adapted to notify the local mobility anchor (LMA) that the second message (PBU2) on a position of the mobile node (MN) in the second network is determined to be falsified, preferentially by setting a flag in the third message (PBU').

49. A local mobility anchor adapted to verify an attachment of a mobile node (MN) to a network element in a network, said network using a network-based mobility management scheme for managing the mobility of the mobile node (MN), said local mobility anchor comprising:
receiving means for receiving a first message on a position of a mobile node (MN) in a first network, said first message comprising a first IP address, and a second message on a position of the mobile node (MN) in a second network, said second message comprising a second IP address, wherein said second network uses a network-based mobility management scheme for managing the mobility of the mobile node (MN)and
transmitting means for transmitting an acknowledgment message to both the first and second IP address, said acknowledgment message requesting a re-transmission of a first message on a position of the mobile node (MN) in the first network and a second message on a position of the mobile node (MN) in the second network, respectively,
detecting means for detecting whether the second message on a position of the mobile node (MN) in the second network is falsified based on a re-transmitted message on the position of the mobile node (MN) that is received by the local mobility anchor (LMA).

50. The local mobility anchor according to claim 49, wherein the local mobility anchor is adapted to perform the steps of the method according to one of claims 17 to 20 or according to one of claims 22 to 29 or according to one of claims 31 to 33.
